# FASCICULE DE BREVET EUROPEEN

(11) **EP 2 800 667 B1**
(45) Date de publication et mention de la délivrance du brevet: **18.11.2015**
(21) Numéro de dépôt: 12815736.9
(22) Date de dépôt: 12.12.2012
(51) Int. Cl.: B05B 15/04, B05C 3/09, B62D 25/24

(54) **AGENCEMENT ANTI-COULURE D'UNE PAROI TROUÉE D'UNE PORTE D'UN VÉHICULE**
AUSLAUFSCHUTZANORDNUNG FÜR EINE GELOCHTE WAND EINER FAHRZEUGTÜR
ANTI-RUN ARRANGEMENT FOR A HOLED WALL OF A VEHICLE DOOR

(30) Priorité: 06.01.2012 FR 1250155
(43) Date de publication de la demande: 12.11.2014
(73) Titulaire: Peugeot Citroën Automobiles SA, 78140 Vélizy Villacoublay (FR)
(72) Inventeur: PREVOST, Francois, F-25750 Desandans (FR)
(74) Mandataire: Fosse, Danièle
(86) Numéro de dépôt international: PCT/FR2012/052910
(87) Numéro de publication internationale: WO 2013/102713

(56) Documents cités:
- FR-A1- 2 866 250
- FR-A1- 2 927 052
- FR-A1- 2 938 495
- GB-A- 2 031 052

## Description

L'invention concerne un agencement d'une paroi trouée d'une porte d'un véhicule, pour empêcher un liquide de traitement de surface de s'écouler sur une face esthétique de la paroi, de haut en bas sous l'effet de la gravité terrestre.

La paroi, comme la paroi d'une porte du véhicule, comporte généralement une première tôle extérieure et une seconde tôle intérieure formant renfort, les tôles s'étendant globalement verticalement.

La première tôle présente une face extérieure formant face esthétique, c'est-à-dire une face qui est visible de l'extérieur par l'utilisateur final.

De plus, la première tôle comporte un premier trou délimité par un premier bord périphérique, pour le passage d'une vis, par exemple.

La seconde tôle intérieure est accolée à la première tôle, et elle présente une face intérieure, dite face de coulure.

De plus, la seconde tôle comporte un second trou, pour le guidage d'une vis par exemple, qui est délimité par un second bord périphérique.

Le second trou est globalement concentrique au premier trou, et il présente un diamètre sensiblement inférieur au diamètre du premier trou.

Le traitement de surface de la structure, ou caisse, d'un véhicule automobile comporte une succession d'étapes, dont une étape dite de cataphorèse.

L'étape de cataphorèse consiste à immerger la structure du véhicule dans un bain d'un liquide contenant de la peinture.

La structure du véhicule est mise en cathode, les particules de peintures en suspension dans le bain migrent d'une anode vers la structure formant cathode, au moyen d'un courant électrique.

A la sortie du bain de cataphorèse, le liquide s'évacue par les trous de la structure vers le bas, sous l'effet de la gravité terrestre.

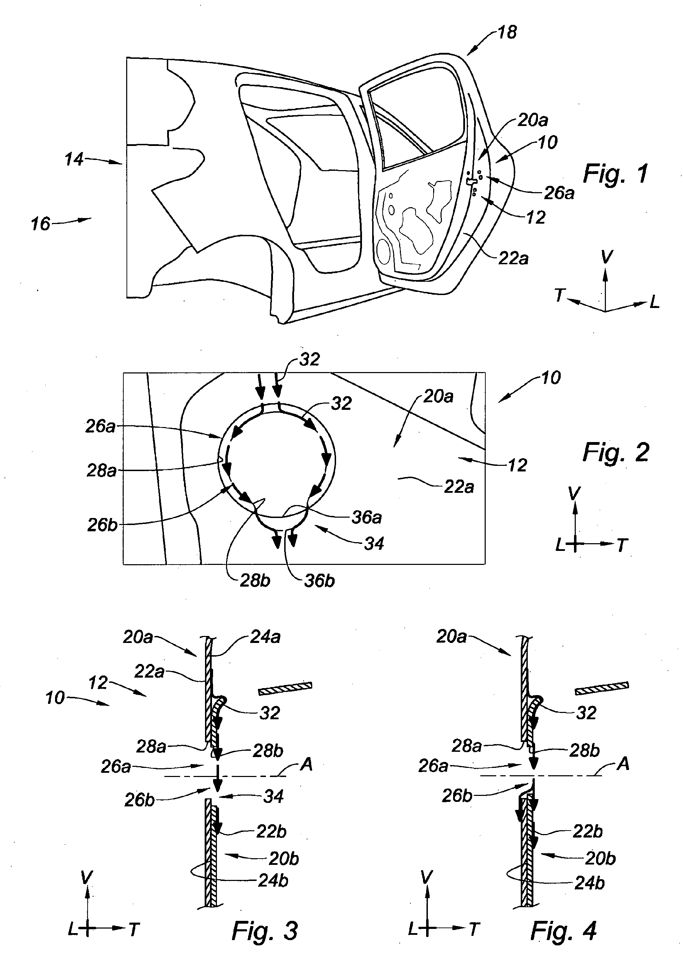

Comme on peut le voir à la figure 4, la seconde tôle 20b intérieure de la structure 14 peut former un obstacle à l'écoulement du liquide 32 et une retenue de liquide, de sorte qu'il arrive fréquemment qu'un résiduel du liquide s'écoule depuis la seconde tôle 20b intérieure, jusqu'à la première tôle 20a extérieure, de sorte que le liquide 32 forme une coulure et sèche sur la face esthétique 22a de la paroi, qui doit être retouchée par un opérateur.

En effet, comme on peut le voir à la figure 4, le liquide 32 s'écoule le long de la face intérieure 22b de la seconde tôle 20b intérieure, suit le second bord périphérique 28b du second trou 26b, s'amoncèle dans une portion inférieure du second bord périphérique 28b, puis s'écoule en partie le long de la face esthétique 22a de la première tôle 20a extérieure.

Le document FR-A-2938495 décrit et représente un dispositif de support et de manutention provisoire d'un volet arrière de véhicule automobile sur chaîne de montage.

Ce dispositif comporte notamment un élément du type d'un boulon qui est agencé dans un trou d'une paroi du volet arrière du véhicule, et qui obstrue le trou, empêchant ainsi l'écoulement du liquide de la cataphorèse vers l'extérieur du volet arrière, et empêchant les coulures sur la face esthétique extérieure du volet arrière.

Bien que ce dispositif permette d'empêcher une coulure sur la face esthétique du volet, il nécessite la fabrication et la mise en place d'une pièce supplémentaire, ici un boulon.

Un autre document FR-A-2866250 décrit et représente une gouttière pour la mise en oeuvre d'un procédé de traitement de surface d'une caisse d'un véhicule automobile.

Selon ce document, la gouttière comporte une aile dont une première extrémité est en contact avec la caisse et dont une seconde extrémité est dirigée vers une zone non esthétique de la caisse, pour dévier une coulure issue du procédé de traitement de surface.

De même que le dispositif décrit dans le document FR-A-2938495, la gouttière décrite dans le document FR-A-2866250 nécessite la fabrication d'une pièce supplémentaire, ici une gouttière, et la mise en place de cette gouttière.

GB 2031052 décrit aussi une porte de véhicule dont la paroi comporte deux tôles accolées et percées.

Pour pallier notamment ces inconvénients, l'invention propose un agencement de la première tôle et de la seconde tôle formant la paroi pour empêcher l'écoulement de liquide sur la face extérieure esthétique de la première tôle, sans ajouter de pièce supplémentaire.

Dans ce but, l'invention propose un agencement d'une paroi trouée d'un véhicule, pour empêcher un liquide de traitement de surface de s'écouler sur une face esthétique de ladite paroi, de haut en bas sous l'effet de la gravité terrestre, la paroi comportant :
- une première tôle extérieure globalement verticale qui présente une face extérieure formant face esthétique, et qui comporte un premier trou délimité par un premier bord périphérique, et
- une seconde tôle intérieure globalement verticale qui est accolée à la première tôle, qui présente une face intérieure formant face de coulure, et qui comporte un second trou délimité par un second bord périphérique, caractérisé en ce que le second bord périphérique du second trou comporte une portion inférieure délimitant une échancrure qui s'étend vers la bas, au dessous d'une portion inférieure du premier bord périphérique du premier trou, l'échancrure étant conçue pour guider le liquide vers le bas et pour que ladite portion inférieure du premier bord périphérique s'oppose à l'écoulement du liquide de traitement de surface depuis la seconde tôle intérieure, jusqu'à la face esthétique de la première tôle extérieure.

Un tel agencement ne nécessite pas de pièce supplémentaire et il est réalisable par un simple usinage de la seconde tôle.

Selon une autre caractéristique, le premier trou et le second trou sont chacun d'une forme globalement circulaire et ils sont coaxiaux, le second trou étant d'un diamètre sensiblement inférieur au diamètre du premier trou.

De plus, l'échancrure est de la forme d'un demi-cercle.

Aussi, la paroi est une paroi d'une porte d'un véhicule.

La première tôle extérieure est une doublure de porte et la seconde tôle intérieure est un renfort de serrure de ladite porte.

Le premier trou est un trou de passage d'une vis de fixation d'une serrure et le second trou est un trou de guidage de ladite vis de fixation.

Le liquide de traitement de surface est un liquide conçu pour être déposé sur la paroi au cours d'un procédé de cataphorèse.

L'invention concerne aussi une porte de véhicule comportant un agencement d'une paroi trouée d'un véhicule, selon l'une quelconque des revendications précédentes.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective, qui illustre une structure d'un véhicule qui est équipé d'une porte comportant une portion d'une paroi trouée formée d'une première tôle extérieure et d'une seconde tôle intérieure de renfort, selon l'invention ;
- la figure 2 est une vue schématique de détail, qui illustre la portion de la paroi trouée de la figure 1, formée par un premier trou délimité par la première tôle extérieure et par un second trou avec échancrure délimité par la seconde tôle, selon l'invention ;
- la figure 3 est une vue schématique en section transversale, qui illustre l'écoulement du liquide sur la seconde tôle intérieure, grâce à l'échancrure selon l'invention ;
- la figure 4 est vue schématique en section transversale similaire à la figure 3, qui illustre l'écoulement du liquide sur la première tôle extérieure, selon l'état de la technique.

Dans la description et les revendications, on utilisera à titre non limitatif les expressions « supérieur », « inférieur » et « bas », « haut » en référence à la gravité terrestre et en référence à la partie supérieure et à la partie inférieure respectivement des figures 1 à 4.

De plus, pour clarifier la description et les revendications, on adoptera à titre non limitatif la terminologie vertical, longitudinal et transversal en référence au trièdre L, V, T indiqué aux figures.

On a représenté à la figure 1 un agencement 10 d'une paroi 12 trouée d'une structure 14, ou caisse, d'un véhicule 16 automobile.

La paroi 12 est une portion d'une porte 18 du véhicule 16, qui est conçue pour recevoir une serrure (non représentée) et qui s'étend globalement verticalement.

A cet effet, la paroi 12 comporte une première tôle 20a extérieure formant doublure de porte, et une seconde tôle 20b intérieure formant renfort, qui est accolée à la première tôle 20a extérieure, comme on peut le voir à la figure 3.

La première tôle 20a extérieure présente une face extérieure 22a formant face esthétique 22a visible depuis l'extérieur du véhicule 16, et une face d'appui 24a qui coopère avec la seconde tôle 20b intérieure.

La première tôle 20a comporte un premier trou 26a circulaire qui est délimité par un premier bord périphérique 28a, pour le passage d'une vis de fixation (non représentée) de la serrure.

De même, la seconde tôle 20b intérieure présente une face intérieure 22b formant face de coulure agencée à l'intérieur de la porte 18, et une face d'appui 24b qui est en appui sur la face d'appui 24a complémentaire de la première tôle 20a extérieure.

La seconde tôle 20b comporte un second trou 26b circulaire qui est délimité par un second bord périphérique 28b, pour le guidage de la vis de fixation de la serrure.

En référence à la figure 2, le premier trou 26a est d'un diamètre sensiblement supérieur au diamètre du second trou 26b.

De plus, le premier trou 26a et le second trou 26b sont agencés de façon coaxiale selon un axe A principal globalement transversal.

L'agencement 10 est conçu pour empêcher un liquide 32 de traitement de surface de s'écouler sur la face esthétique 22a de la première tôle 20a de la paroi 12, de haut en bas sous l'effet de la gravité terrestre.

Le liquide 32 de traitement est un liquide d'un bain de cataphorèse dans lequel la structure 14 est plongée préalablement.

Conformément à l'invention, une portion inférieure du second bord périphérique 28b du second trou 26b présente une échancrure 34, représentée aux figures 2 et 3, qui est conçue pour empêcher le liquide 32 de traitement de surface de s'écouler depuis la seconde tôle 20b intérieure, jusqu'à la face esthétique 22a de la première tôle 20a extérieure.

A cet effet, l'échancrure 34 s'étend vers le bas au dessous d'une portion inférieure du premier bord périphérique 28a du premier trou 26a, de sorte que l'extrémité inférieure 36b du second bord périphérique 28b est située au dessous de l'extrémité inférieure 36a du premier bord périphérique 28a, selon une direction verticale.

L'échancrure 34 est conçue pour guider le liquide 32 jusqu'à l'extrémité inférieure 36b du second bord périphérique qui est située plus bas que l'extrémité inférieure 36a du premier bord périphérique 28a

Ainsi, l'extrémité inférieure 36a du premier trou 26a s'oppose à l'écoulement du liquide 32 vers la face esthétique 22a de la première tôle 20a.

L'échancrure 34 est ici de la forme d'un demi-cercle. Toutefois, l'échancrure 34 peut adopter toute forme permettant à l'extrémité inférieure 36b du second bord périphérique 28b du second trou 26b d'être située au dessous de l'extrémité inférieure 36a du premier bord périphérique 28a du premier trou 26a.

Comme on peut le voir aux figures 2 et 3, selon des observations effectuées, le liquide 32 s'écoule de haut en bas le long de la face intérieure 22b de la seconde tôle 20b intérieure.

Selon une première hypothèse, lorsque le liquide 32 atteint le bord périphérique 28b du second trou 26b, le liquide 32 est dévié et il suit le bord périphérique 28b, de part et d'autre du second trou 26b, jusqu'à l'extrémité inférieure 36b du second bord périphérique 28b formée par l'échancrure 34.

Le liquide 32 s'amoncèle à l'extrémité inférieure 36b du second bord périphérique 28b et poursuit sa descente le long de la face intérieure 22b de la seconde tôle 20b, sans couler sur la face esthétique 22a de la première tôle 20a.

En effet, l'extrémité inférieure 36a du premier bord périphérique 28a constitue un barrage empêchant le liquide 32 de s'écouler le long de la face esthétique 22a de la première tôle 20a.

Selon une seconde hypothèse non représentée, moins fréquente que la première hypothèse, lorsque le liquide 32 atteint le bord périphérique 28b du second trou 26b, le liquide 32 forme une goutte qui tombe depuis l'extrémité supérieure du second bord périphérique 28b, jusqu'à l'extrémité inférieure 36b du second bord périphérique 28b.

Selon la seconde hypothèse, le liquide 32 poursuit sa descente le long de la face intérieure 22b de la seconde tôle 20b, sans couler sur la face esthétique 22a de la première tôle 20a, si l'extrémité supérieure du second bord périphérique 28b est sensiblement à l'aplomb de l'extrémité inférieure 36b du second bord périphérique 28b.

## Revendications

1. Agencement (10) d'une paroi (12) trouée d'un véhicule (16), pour empêcher un liquide (32) de traitement de surface de s'écouler sur une face esthétique (22a) de ladite paroi (12), de haut en bas sous l'effet de la gravité terrestre, la paroi (12) comportant :
- une première tôle (20a) extérieure globalement verticale qui présente une face extérieure formant face esthétique (22a), et qui comporte un premier trou (26a) délimité par un premier bord périphérique (28a), et
- une seconde tôle (20b) intérieure globalement verticale qui est accolée à la première tôle (20a), qui présente une face intérieure (24b) formant face de coulure, et qui comporte un second trou (26b) délimité par un second bord périphérique (28b), **caractérisé en ce que** le second bord périphérique (28b) du second trou (26b) comporte une portion inférieure délimitant une échancrure (34) qui s'étend vers la bas, au dessous d'une portion inférieure du premier bord périphérique (28a) du premier trou (26a), l'échancrure (34) étant conçue pour guider le liquide (32) vers le bas et pour que ladite portion inférieure du premier bord périphérique (28a) s'oppose à l'écoulement du liquide (32) de traitement de surface depuis la seconde tôle (20b) intérieure, jusqu'à la face esthétique (22a) de la première tôle (20a) extérieure.

2. Agencement (10) selon la revendication 1, **caractérisé en ce que** le premier trou (26a) et le second trou (26b) sont chacun d'une forme globalement circulaire et ils sont coaxiaux, le second trou (26b) étant d'un diamètre sensiblement inférieur au diamètre du premier trou (26a).

3. Agencement (10) selon l'une quelconque des revendications précédentes, **caractérisé en ce que** l'échancrure (34) est de la forme d'un demi-cercle.

4. Agencement (10) selon l'une quelconque des revendications précédentes, **caractérisé en ce que** la paroi (12) est une paroi d'une porte (18) d'un véhicule (16).

5. Agencement (10) selon l'une quelconque des revendications précédentes, **caractérisé en ce que** la première tôle (20a) extérieure est une doublure de porte et la seconde tôle (20b) intérieure est un renfort de serrure de ladite porte (18).

6. Agencement (10) selon l'une quelconque des revendications précédentes, **caractérisé en ce que** le premier trou (26a) est un trou de passage d'une vis de fixation d'une serrure et le second trou (26b) est un trou de guidage de ladite vis de fixation.

7. Agencement (10) selon l'une quelconque des revendications précédentes, **caractérisé en ce que** le liquide (32) de traitement de surface est un liquide conçu pour être déposé sur la paroi (12) au cours d'un procédé de cataphorèse.

8. Porte (18) de véhicule comportant un agencement (10) d'une paroi (12) trouée d'un véhicule (16), selon l'une quelconque des revendications précédentes.

## Patentansprüche

1. Anordnung (10) einer gelochten Wand (12) eines Fahrzeugs (16), um zu verhindern, dass eine Flüssigkeit (32) zur Oberflächenbehandlung durch die Wirkung der Erdanziehungskraft von oben nach unten auf einer ästhetischen Seite (22a) der besagten Wand (12) verläuft, wobei die Wand (12) folgendes umfasst:
- ein erstes äußeres und im Allgemeinen vertikales Blech (20a), das eine Außenseite aufweist, die die ästhetische Seite (22a) bildet, und die ein erstes Loch (26a) umfasst, das durch einen ersten umlaufenden Rand (28a) begrenzt wird, und
- ein zweites inneres und im Allgemeinen vertikales Blech (20b), das an das erste Blech (20a) angefügt ist, und eine Innenfläche (24b) aufweist, die die Verlaufseite bildet und die ein zweites Loch (26b) umfasst, das durch einen zweiten umlaufenden Rand (28b) begrenzt wird, **dadurch gekennzeichnet, dass** der zweite umlaufende Rand (28b) des zweiten Loches (26b) einen unteren Abschnitt umfasst, der eine Aussparung (34) begrenzt, die sich oberhalb eines unteren Abschnitts des ersten umlaufenden Randes (28a) des ersten Loches (26a) nach unten erstreckt, wobei die Aussparung (34) gestaltet ist, um die Flüssigkeit (32) nach unten abzuleiten und damit sich der besagte untere Abschnitt des ersten umlaufenden Randes (28a) dem Verlaufen der Flüssigkeit (32) zur Oberflächenbehandlung vom zweiten inneren Blech (20b) bis zur ästhetischen Seite (22a) des ersten äußeren Blechs (20a) entgegenstellt.

2. Anordnung (10) nach Anspruch 1, **dadurch gekennzeichnet, dass** das erste Loch (26a) und das zweite Loch (26b) jeweils eine im Allgemeinen runde Form aufweisen und koaxial sind, wobei das zweite Loch (26b) einen etwas kleineren Durchmesser aufweist, als der Durchmesser des ersten Lochs (26a).

3. Anordnung (10) nach irgendeinem der vorherigen Ansprüche, **dadurch gekennzeichnet, dass** die Aussparung (34) die Form eines Halbkreises aufweist.

4. Anordnung (10) nach irgendeinem der vorherigen Ansprüche, **dadurch gekennzeichnet, dass** die Wand (12) eine Wand einer Tür (18) eines Fahrzeugs (16) ist.

5. Anordnung (10) nach irgendeinem der vorherigen Ansprüche, **dadurch gekennzeichnet, dass** das erste äußere Blech (20a) ein Türinnenblech ist und das zweite innere Blech (20b) eine Verstrebung des Schlosses der besagten Tür (18) ist.

6. Anordnung (10) nach irgendeinem der vorherigen Ansprüche, **dadurch gekennzeichnet, dass** das erste Loch (26a) ein Durchgangsloch für eine Befestigungsschraube eines Schlosses ist, und das zweite Loch (26b) ein Führungsloch für die besagte Befestigungsschraube ist.

7. Anordnung (10) nach irgendeinem der vorherigen Ansprüche, **dadurch gekennzeichnet, dass** die Flüssigkeit (32) zur Oberflächenbehandlung eine Flüssigkeit ist, die entwickelt wurde, um im Laufe eines Verfahrens der elektrophoretischen Abscheidung auf der Wand (12) aufgebracht zu werden.

8. Fahrzeugtür (18) eine Anordnung (10) einer gelochten Wand (12) eines Fahrzeugs (16) nach irgendeinem der vorherigen Ansprüche umfassend.

## Claims

1. Arrangement (10) of a perforated wall (12) of a vehicle (16), to prevent a surface-treatment liquid (32) from flowing over an aesthetic face (22a) of said wall (12), downwards under the effect of terrestrial gravity, the wall (12) comprising:
- a first roughly vertical external metal sheet (20a) that has an external face forming an aesthetic face (22a) and comprises a first hole (26a) delimited by a first peripheral edge (28a), and
- a second roughly vertical internal metal sheet (20b) that is up against the first metal sheet (20a) which has an internal face (24b) forming a running face, and comprises a second hole (26b) delimited by a second peripheral edge (28b), **characterised in that** the second peripheral edge (28b) of the second hole (26b) comprises a lower portion delimiting a scallop (34) that extends downwards, below a lower portion of the first peripheral edge (28a) of the first hole (26a), the scallop (34) being designed to guide the liquid (32) downwards and so that said lower portion of the first peripheral edge (28a) opposes the flow of the surface-treatment liquid (32) from the second internal metal sheet (20b), as far as the aesthetic face (22a) of the first external metal sheet (20a).

2. Arrangement (10) according to claim 1, **characterised in that** the first hole (26a) and the second hole (26b) each have a roughly circular shape and are coaxial, the second hole (26b) having a diameter substantially less than the diameter of the first hole (26a).

3. Arrangement (10) according to any one of the preceding claims, **characterised in that** scallop (34) is in the form of a semicircle.

4. Arrangement (10) according to any one of the preceding claims, **characterised in that** the wall (12) is a wall of a door (18) of a vehicle (16).

5. Arrangement (10) according to any one of the preceding claims, **characterised in that** the first external metal sheet (20a) is a door lining and the second internal metal sheet (20b) is a lock reinforcement of said door (18).

6. Arrangement (10) according to any one of the preceding claims, **characterised in that** the first hole (26a) is a passage hole for a screw fixing a lock and the second hole (26b) is a hole for guiding said fixing screw.

7. Arrangement (10) according to any one of the preceding claims, **characterised in that** the surface-treatment liquid (32) is a liquid designed to be deposited on the wall (12) during a cataphoresis process.

8. Vehicle door (18) comprising an arrangement (10) of a perforated wall (12) of a vehicle (16), according to any one of the preceding claims.
